# EUROPEAN PATENT APPLICATION

(11) **EP 4 335 594 A1**
(43) Date of publication of application: **13.03.2024**
(21) Application number: 22798834.2
(22) Date of filing: 17.03.2022
(51) Int. Cl.: B25F 5/00, B25B 23/14, G05B 19/418, G06Q 50/04

(54) **TOOL SYSTEM, PROCESSING METHOD, PROGRAM, AND TOOL DEVICE**

(30) Priority: 07.05.2021 JP 2021079149
(71) Applicant: Panasonic Holdings Corporation, Osaka 571-8501 (JP)
(72) Inventor: IKEDA, Masaki, Kadoma-shi, Osaka 571-0057 (JP); MIWA, Tatsuya, Kadoma-shi, Osaka 571-0057 (JP)
(74) Representative: Müller-Boré & Partner Patentanwälte PartG mbB
(86) International application number: PCT/JP2022/012367
(87) International publication number: WO 2022/234727

(57) **Abstract**

Disclosed herein is a technique for improving operation efficiency. A tool system (3) includes a tool device (1) and an information management device (2). The tool device (1) includes a tool unit (13), an acquisition unit (19), and a transmission unit (15). The tool unit (13) is driven by a power source and performs a particular series of operations on a work target. The acquisition unit (19) acquires operation information (D1) including information for use to determine an operation interval between a first operation included in the particular series of operations and a second operation following the first operation and also included in the particular series of operations. The transmission unit (15) transmits the operation information (D1). The information management device (2) includes a reception unit (22). The reception unit (22) receives the operation information (D1) from the tool device (1).

## Description

### Technical Field

The present disclosure generally relates to a tool system, a processing method, a program, and a tool device, and more particularly relates to a tool system including a tool device, a processing method applicable to a tool system, a program, and a tool device.

### Background Art

Patent Literature 1 discloses an operations management device, an operations management system, and a program, all of which contribute to making management about what types of operations have been performed on respective work targets. According to Patent Literature 1, a smart terminal includes an operation information acquisition unit, a position information acquisition unit, and an information management unit. The operation information acquisition unit acquires, from a tool, operation information about the specifics of the operation that has been performed on a work target using a tool. The position information acquisition unit acquires position information about a workplace based on positioning data provided by a GPS receiver. The work target information acquisition unit acquires, based on information collected by reading, with a barcode reader, a barcode affixed to the work target member, work target information to identify the work target. The information management unit stores, with respect to each operation, the operation information, the position information, and the work target information in a storage unit in association with each other.

### Citation List

### Patent Literature

Patent Literature 1: JP 2016-91316 A

### Summary of Invention

When a worker performs operations using a tool device, the operation efficiency sometimes needs to be further improved.

In view of the foregoing background, it is therefore an object of the present disclosure to provide a tool system, a processing method, a program, and a tool device, all of which contribute to further improving the operation efficiency.

A tool system according to an aspect of the present disclosure includes a tool device and an information management device. The tool device includes a tool unit, an acquisition unit, and a transmission unit. The tool unit is driven by a power source and performs a particular series of operations on a work target. The acquisition unit acquires operation information including information for use to determine an operation interval between a first operation and a second operation. The first operation is included in the particular series of operations. The second operation follows the first operation and is also included in the particular series of operations. The transmission unit transmits the operation information. The information management device includes a reception unit that receives the operation information from the tool device.

A processing method according to another aspect of the present disclosure includes an acquisition step and a transmission step. The acquisition step includes acquiring operation information including information for use to determine an operation interval between a first operation and a second operation. The first operation is included in a particular series of operations to be performed on a work target by a tool unit to be driven by a power source. The second operation follows the first operation and is also included in the particular series of operations. The transmission step includes transmitting the operation information to an information management device.

A processing method according to still another aspect of the present disclosure includes a reception step. The reception step includes receiving, from a tool device including a tool unit, operation information including information for use to determine an operation interval between a first operation and a second operation. The first operation is included in a particular series of operations to be performed on a work target by a tool unit to be driven by a power source. The second operation follows the first operation and is also included in the particular series of operations.

A program according to yet another aspect of the present disclosure is designed to cause one or more processors to perform one of these two processing methods.

A tool device according to yet another aspect of the present disclosure includes a tool unit, an acquisition unit, and a transmission unit. The tool unit is driven by a power source and performs a particular series of operations on a work target. The acquisition unit acquires operation information including information for use to determine an operation interval between a first operation and a second operation. The first operation is included in the particular series of operations. The second operation follows the first operation and is also included in the particular series of operations. The transmission unit transmits the operation information. The transmission unit transmits, as pieces of the operation information, a first piece of information corresponding to the operation information of the first operation and a second piece of information corresponding to the operation information of the second operation to an information management device.

### Brief Description of Drawings

FIG. 1 is a schematic block diagram of a tool system according to an exemplary embodiment;
FIG. 2 illustrates a schematic system configuration for the tool system;
FIG. 3 is a schematic representation illustrating an exemplary tool device for use in the tool system;
FIG. 4 is a sequence chart showing the procedure of operation of the tool system;
FIG. 5 illustrates an exemplary image displayed on the screen of an information management device included in the tool system;
FIG. 6 shows how the tool system operates; and

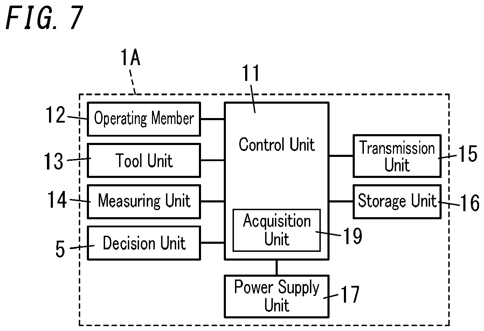

FIG. 7 is a schematic block diagram of a tool device according to a variation.

### Description of Embodiments

Note that the embodiment and its variations to be described below are only exemplary ones of various embodiments and variations of the present disclosure and should not be construed as limiting. Rather, the exemplary embodiment and its variations may be readily modified in various manners depending on a design choice or any other factor without departing from a true spirit and scope of the present disclosure.

### (Embodiment)

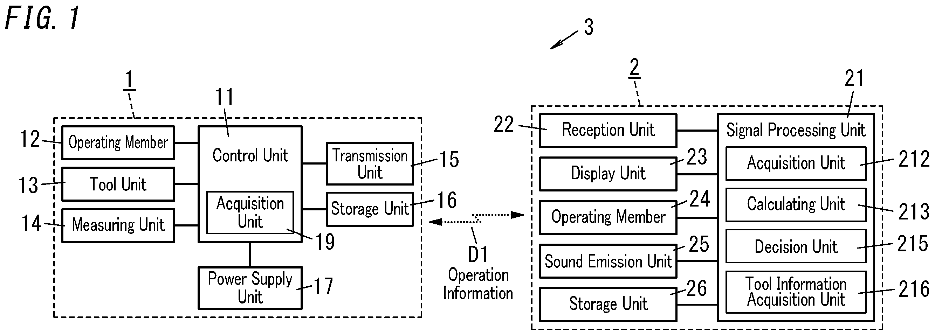

A tool system, a processing method, a program, and a tool device according to an exemplary embodiment will be described with reference to FIGS. 1-6.

### (1) Overview

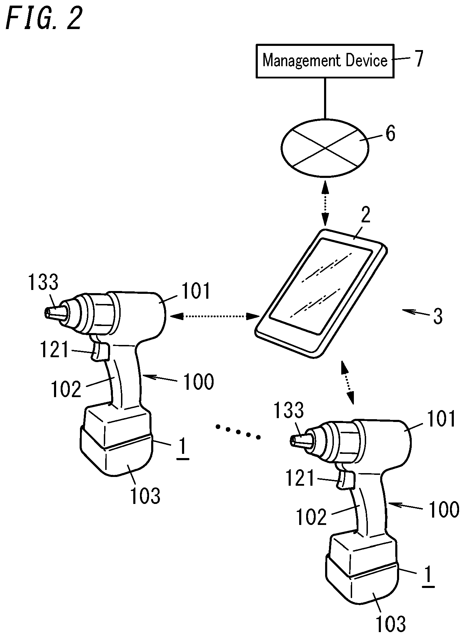

FIG. 1 is a schematic block diagram of a tool system 3 according to an exemplary embodiment. FIG. 2 illustrates a schematic system configuration for the tool system 3.

As shown in FIGS. 1 and 2, a tool system 3 according to this embodiment includes a tool device 1 and an information management device 2.

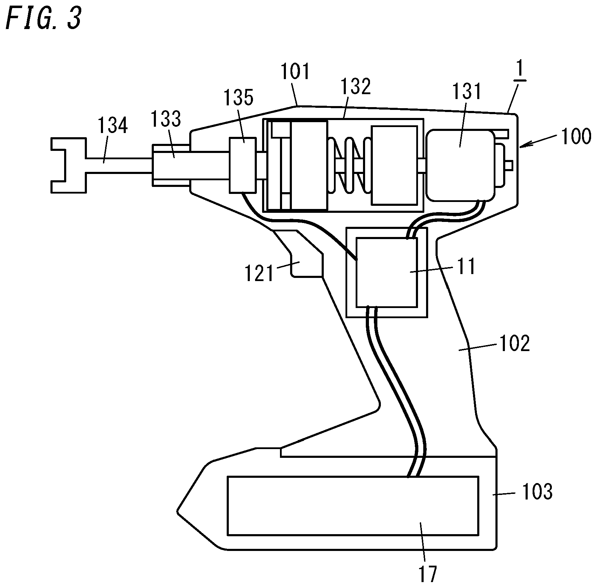

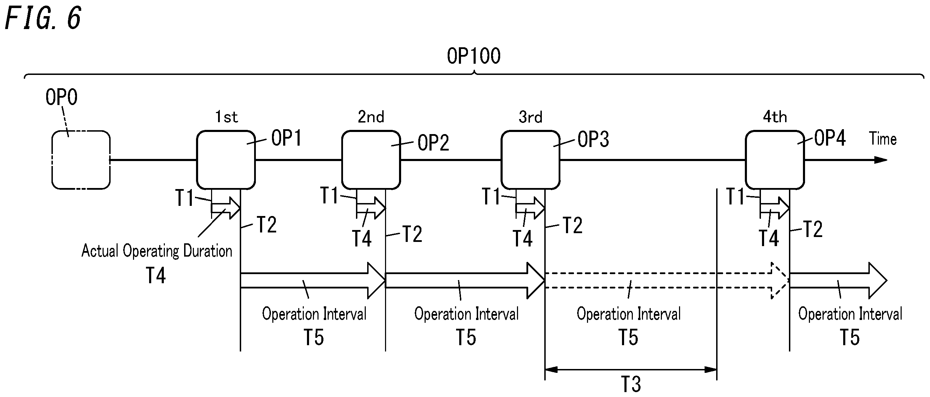

As shown in FIGS. 1 and 3, the tool device 1 may be a tool for use by business operators at factories and construction sites, for example. As shown in FIG. 1, the tool device 1 includes a tool unit 13, an acquisition unit 19, and a transmission unit 15. The tool unit 13 is driven by a power source and performs a particular series of operations OP100 (refer to FIG. 6) on a work target. As used herein, the particular series of operations OP 100 refers to, for example, performing the operations of fastening a work target (such as a steel plate) onto a base member using a plurality of fastening members (such as screws and bolts) in accordance with a blueprint or operating instructions. The tool device 1 may be, for example, an electric impact screwdriver for fastening a fastening member by turning the fastening member with impacting force applied thereto. Note that the tool device 1 does not have to be an electric impact screwdriver but may also be an electric impact wrench or an electric drill-screwdriver or an electric torque wrench that does not require applying impacting force. Furthermore, the tool device 1 does not have to be an electric tool but may also be, for example, an air tool (such as a screwdriver or a nailing machine) to be driven with compressed air.

The acquisition unit 19 acquires operation information D1 including information for use to determine an operation interval T5 (refer to FIG. 6) between a first operation OP1 (refer to FIG. 6) and a second operation OP2 (refer to FIG. 6). The first operation OP1 is included in the particular series of operations OP 100. The second operation OP2 follows the first operation OP1 and is also included in the particular series of operations OP100. In this embodiment, the first operation OP1 and the second operation OP2 are supposed to be both included in the particular series of operations OP100 and the same type of operation (e.g., the operation of fastening a screw). However, the first operation OP1 and the second operation OP2 may be different types of operations. For example, the first operation OP1 may be the operation of tightening a screw while the second operation OP2 may be the operation of loosening a screw.

The transmission unit 15 transmits the operation information D1 to the information management device 2. In this embodiment, the tool device 1 is supposed to include the transmission unit 15. However, this configuration is only an example and should not be construed as limiting. Alternatively, the tool device 1 may include a communications unit with the ability to communicate bidirectionally with the information management device 2.

As shown in FIG. 1, the information management device 2 includes a reception unit 22 for receiving the operation information D1 from the tool device 1. In this embodiment, the operation information D1 includes information for use to determine the operation interval T5. Specifically, the operation information D1 includes pieces of information about multiple individual operations (namely, the first operation OP1 and the second operation OP2) included in the particular series of operations OP100 (refer to FIG. 6). More specifically, the operation information D1 includes at least one of a time when the worker started performing an assigned one of the multiple individual operations or the fastening torque value associated with the operation. In this embodiment, the operation information D1 includes pieces of information about multiple individual operations included in the particular series of operations OP100 and includes both a time when the worker started performing an assigned one of the multiple individual operations and the fastening torque value associated with the assigned operation. For example, the operation information D1 concerning the first operation OP1 includes a time when the worker started operating to perform the first operation OP1 and a fastening torque value associated with the first operation OP1. The operation information D1 about the second operation OP2 includes a time when the worker started operating to perform the second operation OP2 and a fastening torque value associated with the second operation OP2. Next, a go/no-go decision will be described. As shown in FIG. 1, the tool device 1 includes a measuring unit 14. The measuring unit 14 measures a fastening torque value and stores the fastening torque value in a storage unit 16 of the tool device 1. The tool device 1 also makes the transmission unit 15 transmit the fastening torque value, included in the operation information D1, to the information management device 2. In this embodiment, the information management device 2 includes a decision unit 215. The decision unit 215 makes, based on the fastening torque value received by the reception unit 22, a go/no-go decision about the fastening operation. The go/no-go decision includes, for example, a go/no-go decision made about the fastening operation.

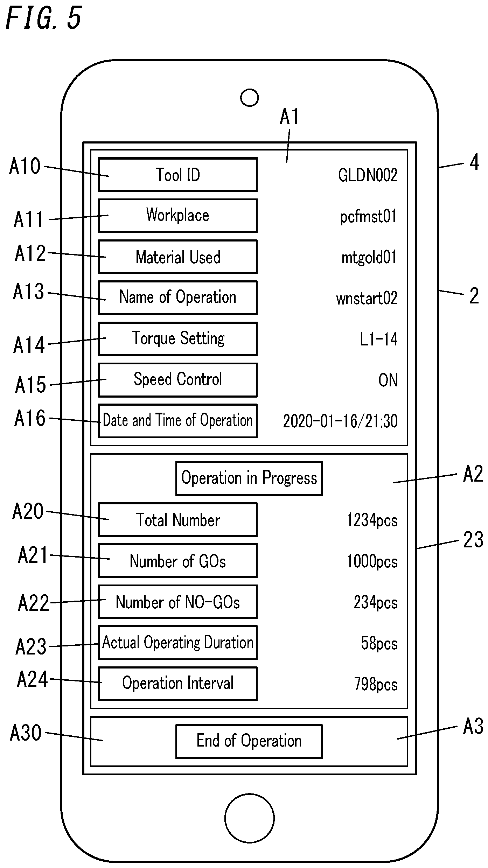

The information management device 2 includes a display unit 23 that displays at least one of the operation interval T5 based on the operation information D1 or worker's attribute information based on the operation information D1. The display unit 23 may display the operation interval T5 or the worker's attribute information, whichever is appropriate. Alternatively, the display unit 23 may display both the operation interval T5 and the worker's attribute information. As used herein, the "worker's attribute information" refers to information about the worker's learning level to be analogized by the operation interval T5, for example. Specifically, if the operation interval T5 is shorter than a predetermined amount of time, then the information management device 2 presumes that the worker will be familiarized with the particular series of operations OP100 to display "Level 1." On the other hand, if the operation interval T5 is equal to or longer than the predetermined amount of time, then the information management device 2 presumes that the worker will not be familiarized with the particular series of operations OP100 to display "Level 2," for example. That is to say, it can be said that the worker's attribute information is a notation with no time indication. The attribute information does not have to be the learning level but may also be a performance evaluation index. In this embodiment, only the operation interval T5, for example, is supposed to be displayed as shown in FIG. 5 out of the operation interval T5 and the attribute information.

The information management device 2 is a mobile device including the display unit 23. Examples of mobile devices include smartphones 4 and tablet computers. In this embodiment, the information management device 2 is supposed to be a smartphone 4. In the following description, the information management device 2 is supposed to be carried, with him or her, by the worker who performs the operation using the tool device 1. However, this is only an example and should not be construed as limiting. Alternatively, the information management device 2 may also be carried, with him or her, by, for example, an administrator who manages the operations being performed by the worker(s).

### (2) Configuration

As shown in FIG. 1, the tool device 1 includes a control unit 11, an operating member 12, the tool unit 13, the measuring unit 14, the transmission unit 15, the storage unit 16, and a power supply unit 17. The tool device 1 further includes a body 100 as shown in FIG. 3.

The body 100 either houses inside, or holds, the tool unit 13, the control unit 11, the operating member 12, the tool unit 13, the measuring unit 14, the transmission unit 15, the storage unit 16, the power supply unit 17, and other members. The body 100 includes a cylindrical barrel 101 and a grip 102 protruding radially from a circumferential surface of the barrel 101 (refer to FIG. 3). An output shaft 133 of the tool unit 13 protrudes from one axial end portion of the barrel 101. To (the lower end in FIG. 2 of) the grip 102, a battery pack 103, which houses the power supply unit 17 in a resin case, is attached removably.

The control unit 11 may be implemented as a computer system including one or more processors (microprocessors) and one or more memories. That is to say, the one or more processors perform the functions of the control unit 11 by executing one or more programs (applications) stored in the one or more memories. In this embodiment, the program is stored in advance in the memory of the control unit 11. Alternatively, the program may also be downloaded via a telecommunications line such as the Internet or distributed after having been stored in a non-transitory storage medium such as a memory card. As shown in FIG. 1, the control unit 11 includes the acquisition unit 19. That is to say, the control unit 11 has the function of the acquisition unit 19.

The operating member 12 includes a trigger switch 121 provided for the grip 102. Operating the trigger switch 121 causes an operating signal, of which the magnitude is proportional to the depth to which the trigger switch 121 has been pulled (i.e., manipulative variable), to be supplied to the control unit 11.

The tool unit 13 includes a motor 131, an impact mechanism 132, the output shaft 133, and a driver circuit for controlling the rotation of the motor 131 in accordance with a control signal supplied from the control unit 11. The output shaft 133 is provided with a socket 134, to which bit (such as a screwdriver bit), selected according to the work target, is attached removably. The rotational force of the rotary shaft of the motor 131 is transmitted to the output shaft 133 via the impact mechanism 132. The impact mechanism 132 is configured to reduce the rotational velocity of the rotary shaft of the motor 131 and transmit the rotational force with the rotational velocity thus reduced to the output shaft 133 when finding the output torque equal to or less than a predetermined level. The impact mechanism 132 is configured to, when finding the output torque greater than the predetermined level, apply impacting force to the output shaft 133 to screw the fastening member such as a screw or a bolt. The motor 131 and the impact mechanism 132 are housed in the barrel 101.

The measuring unit 14 measures the fastening force applied by the tool unit 13. The measuring unit 14 makes a magnetostrictive torque sensor 135, attached to the output shaft 133, measure the torque applied to the output shaft 133 and calculates the fastening force based on the measured value of the torque sensor 135. Alternatively, the measuring unit 14 may also make a vibration sensor count the number of times the impact mechanism 132 has applied impacting force to the output shaft 133 and calculate the fastening force based on the number of times of application of the impacting force.

The transmission unit 15 is a communications interface for establishing wireless communication with the information management device 2. The wireless communication is supposed to be, for example, a wireless communication compliant with the Wi-Fi(R) standard, the Bluetooth(R) standard, the ZigBee(R) standard, or a low power radio standard requiring no licenses (Specified Low Power Radio standard). The transmission unit 15 may communicate with the information management device 2 via a public communications network 6 such as the Internet.

The storage unit 16 may be implemented as, for example, a read-only memory (ROM) and a random-access memory (RAM). Optionally, identification information assigned individually to the tool device 1 to be used by the worker who carries the information management device 2 with him or her may be registered with the storage unit 16.

The power supply unit 17 is housed in the battery pack 103. The power supply unit 17 includes a rechargeable battery, which is configured to be charged by connecting the battery pack 103, removed from the grip 102, to a charger. The power supply unit 17 supplies the power stored in the rechargeable battery to an electric circuit including the control unit 11 and the motor 131 to allow the electric circuit and the motor 131 to operate.

As shown in FIG. 6, the acquisition unit 19 acquires (i.e., generates) operation information D1 including information for use to determine the operation interval T5 between the first operation OP1 included in the particular series of operations OP100 and the second operation OP2 following the first operation OP1 and also included in the particular series of operations OP100. The acquisition unit 19 keeps time using a timer. As used herein, the "information included in the operation information D1" includes a time when the worker started performing the first operation OP1. In addition, the information included in the operation information D1 also includes the fastening torque value measured by the measuring unit 14. As shown in FIG. 6, the operations may be performed continuously by the worker from the first operation OP1 to the second operation OP2 following the first operation OP1 and then to a third operation OP3 following the second operation OP2, and so on. In this case, when a predetermined amount of time (e.g., 30 minutes) passes between the third operation OP3 and the fourth operation OP4, for example, as shown in FIG. 6, the acquisition unit 19 stops acquiring information concerning the operation information D1. That is to say, when the predetermined amount of time T3 passes since the fastening torque value has been measured and output for the last time, a time-out is called to make the acquisition unit 19 stop acquiring the operation information D1 including information for use to determine the operation interval T5. For example, unless a go/no-go decision is made about the fastening operation as the next operation (e.g., the fourth operation OP4) included in the particular series of operations OP100 before the predetermined amount of time T3 passes since a go/no-go decision has been made about the fastening operation as one operation (e.g., the third operation OP3) included in the particular series of operations OP100, the acquisition unit 19 stops acquiring the operation information D1. As shown in FIG. 6, if there is no operation OP0 preceding the first operation OP1 or if the predetermined amount of time T3 passes to call a time-out, then the operation interval T5 is displayed as 0 seconds on the display unit 23.

Next, the information management device 2 will be described.

The information management device 2 is a mobile telecommunications device (such as a tablet computer or a smartphone) to be carried, with him or her, by the worker who uses the tool device 1. In this embodiment, the information management device 2 is supposed to be a smartphone 4 (refer to FIG. 5). The information management device 2 is still carried by the worker with him or her even while the worker is performing the operation using the tool device 1. The information management device 2 is configured to manage the specifics of the operation being performed by the worker using the tool device 1. In this embodiment, the specifics of the operation include the operation interval T5 and the actual operating duration T4.

As shown in FIG. 1, the information management device 2 includes a signal processing unit 21, the reception unit 22, the display unit 23, an operating member 24, a sound emission unit 25, and a storage unit 26.

The reception unit 22 is a communications module for establishing wireless communication in compliance with the same communications protocol as the transmission unit 15 of the tool device 1. In this embodiment, the reception unit 22 is registered as a master, the transmission unit 15 of the tool device 1 is registered as a slave, and wireless communication is established between the transmission unit 15 and the reception unit 22. Thus, in this example, the tool device 1 and the information management device 2 that are used by one worker staying within a communications area are configured not to communicate with the tool device 1 and the information management device 2 that are used by another worker staying within the same communications area. In the tool system 3 according to this embodiment, wireless communication is established between the tool device 1 and the information management device 2. However, the communication between the tool device 1 and the information management device 2 does not have to be wireless communication but may also be wired communication. Also, the information management device 2 according to this embodiment includes the reception unit 22 for receiving the operation information D1 from the tool device 1. Alternatively, the information management device 2 may include a communications unit with the ability to transmit and receive information to/from the tool device 1.

The display unit 23 may be implemented as, for example, a thin display device such as a liquid crystal display or an organic electroluminescent (EL) display and the content displayed on the display unit 23 is controlled by the signal processing unit 21. The display unit 23 displays the operation interval T5 in accordance with the operation information D1. As used herein, the "operation interval T5" refers to a time interval between a point in time when a go/no-go decision made based on the fastening torque value about the fastening torque is output every time one operation (e.g., the first operation OP1) included in the particular series of operations OP100 is finished and a point in time when a go/no-go decision made about the next operation (e.g., the second operation OP2) is output and is displayed as an amount of time.

FIG. 5 shows an exemplary image to be displayed on the screen of the display unit 23. As shown in FIG. 5, instruction information is displayed in a display area A1 of the display unit 23 of the information management device 2. Specifically, in the display area A1 shown in FIG. 5, the tool ID, the workplace, the material used, the name of the operation, the torque setting, the speed control, and the date and time of operation are displayed in columns A10, A11, A12, A13, A14, A15, and A16, respectively. The tool ID shown in the column A10 corresponds to the ID of a mutually authenticated tool. The workplace shown in the column A11 corresponds to the place where the worker is performing the operation using the tool device 1. The material used shown in the column A12 corresponds to the types of screws or bolts used by the worker to perform the operation. In FIG. 5, the material used is displayed as "mtgold01." The name of the operation shown in the column A13 is the name of the operation being performed by the worker and may be fastening operation, for example. In FIG. 5, the name of the operation is displayed as "wnstart02." The torque setting shown in the column A14 corresponds to the torque setting of the tool device 1. The speed control shown in the column A15 indicates whether speed control is enabled or disabled. The date and time of operation shown in the column A16 indicates the date and time when the operation is performed by the worker. In this embodiment, the display unit 23 displays various types of information in the columns A10-A16. However, this is only an example and should not be construed as limiting. Alternatively, the instruction information displayed may include any piece of information other than the ones shown in FIG. 5. Still alternatively, at least one of these pieces of information displayed in FIG. 5 may be hidden.

In addition, the display unit 23 further displays, in the display area A2, for example, additional pieces of information about the operation in progress as shown in FIG. 5. In the case of the operation of fastening screws, for example, the total number of screws fastened, the number of properly fastened screws (GOs), the number of improperly fastened screws (NO-GOs), the actual operating duration T4, and the operation interval T5 are displayed in columns A20, A21, A22, A23, and A24, respectively. The total number shown in the column A20 corresponds to the total number of the screws that the worker has fastened up to the present in performing the particular series of operations OP100. In FIG. 5, for example, the total number is 1234 (pcs). The number of properly fastened screws shown in the column A21 corresponds to the number of the screws fastened properly (i.e., the number of GOs) among the total number of screws that the worker has fastened up to the present. For example, in FIG. 5, the number of the properly fastened screws is 1000 (pcs). The number of improperly fastened screws shown in the column A22 corresponds to the number of the screws fastened improperly (i.e., the number of NO-GOs) among the total number of screws that the worker has fastened up to the present. For example, in FIG. 5, the number of the improperly fastened screws is 234 (pcs). The actual operating duration T4 shown in the column A23 corresponds to the amount of time between a point in time when the worker started fastening a single screw and a point in time when a go/no-go decision is output. For example, in FIG. 5, the operation interval is 58 seconds. The operation interval T5 shown in the column A24 corresponds, in this embodiment, to a time interval between a point in time when a go/no-go decision about the first operation OP1 is output and a point in time when a go/no-go decision about the second operation OP2 following the first operation OP1 is output. For example, in FIG. 5, the operation interval T5 is 798 seconds. In this embodiment, the display unit 23 displays various types of information in the columns A20-A24 shown in FIG. 5. However, this is only an example and should not be construed as limiting. Alternatively, the information displayed may include any piece of information other than the ones shown in FIG. 5. Still alternatively, at least one of these pieces of information displayed in FIG. 5 may be hidden.

As shown in FIG. 5, the display unit 23 may display, in the display area A3, for example, a button A30 indicating the end of the operation. When finishing performing the operation for the day, the worker presses down this button A30. As a result, the operation information D1 for the day, which is stored in the storage unit 26 of the information management device 2, is acquired and saved by a management device 7 via the public communications network 6.

The operating member 24 may be, for example, a touchscreen switch provided for a thin display serving as the display unit 23 and outputs a signal, representing the operating command entered, to the signal processing unit 21.

The sound emission unit 25 includes a loudspeaker and a driving unit for driving the loudspeaker. The sound emission unit 25 emits an alarm sound such as a beep or a melody or a voice message in accordance with a control signal supplied from the signal processing unit 21.

The storage unit 26 includes a ROM and a RAM, and an electrically rewritable nonvolatile memory such as an electrically erasable programmable read-only memory (EEPROM).

The storage unit 26 may be a built-in memory or a memory card to be connected removably into a card slot of the information management device 2, whichever is appropriate. Alternatively, the storage unit 26 may also be an external storage device (e.g., a storage unit of the management device 7 which is connected to the information management device 2 via the public communications network 6).

The signal processing unit 21 may be implemented as a computer system including one or more processors (microprocessors) and one or more memories. That is to say, the one or more processors perform the functions of the control unit 11 by executing one or more programs (applications) stored in the one or more memories. In this embodiment, the program is stored in advance in the memory of the control unit 11. Alternatively, the program may also be downloaded via a telecommunications line such as the Internet or distributed after having been stored in a non-transitory storage medium such as a memory card. In this embodiment, the acquisition unit 212, the calculating unit 213, the decision unit 215, and the tool information acquisition unit 216 are implemented as respective processing functions of the processor.

The acquisition unit 212 acquires, from the tool device 1 via the reception unit 22, the operation information D1 including information for use to determine an operation interval between a first operation included in the particular series of operations OP100 and a second operation following the first operation and also included in the particular series of operations OP100. In this embodiment, the acquisition unit 212 acquires the operation information D1 from the transmission unit 15 of the tool device 1 via the reception unit 22 of the information management device 2 every time the worker finishes performing the operation such as the first operation or the second operation. In this embodiment, the operation information D1 includes information about the time when the worker started performing the operation and a fastening torque measured value obtained by the measuring unit 14.

The calculating unit 213 calculates the operation interval T5 and the actual operating duration T4 in accordance with the operation information D1 acquired by the acquisition unit 212 (refer to FIG. 6). As used herein, the "actual operating duration T4" corresponds to a time lag between a time T2 when a go/no-go decision made by the decision unit 215 with respect to one operation (individual operation) included in the particular series of operations OP 100 is output and a time T1 when the worker started performing that operation as shown in FIG. 6. The calculating unit 213 stores the result of calculation in the storage unit 26. In this case, the operation information D1 includes information about the time when the worker started performing the individual operation (i.e., the operation start time T1 of the individual operation) and a fastening torque value associated with the operation. The time when the worker started performing the individual operation (i.e., the operation start time T1) is used to calculate the actual operating duration T4. That is to say, the operation information D1 includes information for use to determine the actual operating duration T4 that is the amount of time it has taken to perform the individual operation included in the particular series of operations OP100.

The decision unit 215 determines, based on the fastening torque value, whether fastening has been done properly or not. The decision unit 215 receives the fastening torque value measured by the measuring unit 14 of the tool device 1 via the transmission unit 15 of the tool device 1 and the reception unit 22 of the information management device 2. The decision unit 215 determines, based on the fastening torque value received, whether screws and bolts, for example, have been fastened properly or not. For example, when finding the fastening torque value short of a predetermined value, the decision unit 215 decides that the product be a NO-GO because the screws and bolts should have been fastened improperly. On the other hand, when finding that the fastening torque value has reached the predetermined value, the decision unit 215 decides that the product be a GO because the screws and bolts should have been fastened properly. The go/no-go decision made by the decision unit 215 about fastening is stored in the storage unit 26. In addition, the number of the screws and bolts that have been fastened properly (OK) is displayed in the column A21 of the display unit 23, the number of the screws and bolts that have been fastened improperly (NG) is displayed in the column A22 thereof, and the total number of the screws and bolts is also displayed in the column A20 thereof. These numerical values are updated and displayed in real time every time the go/no-go decision is made.

The tool information acquisition unit 216 acquires, from the tool device 1 associated with the information management device 2, tool information about the specifications of the tool device 1 (such as the product serial number of the tool device 1 and information about a bit to be selected according to the screw to be fastened).

In addition, the information management device 2 also has the capability of communicating with the management device 7 via the public communications network 6 such as the Internet. The management device 7 may be implemented as, for example, a server. In this embodiment, the "server" is supposed to be a single server device. Alternatively, the server may also be made up of a plurality of server devices. In that case, those server devices may form a cloud computing system. Optionally, at least some functions (e.g., the function of the decision unit 215) of the information management device 2 may be provided for the management device 7.

The particular series of operations OP100 may correspond, for example, to the operations to be done in one day. Alternatively, the particular series of operations OP100 may also correspond to operations to be done in a few hours, a few days, one week, or one month. When finishing the operations for the day, the worker presses down, for example, the "End of Operations" button A30 provided in the display area A3 of the image displayed on the screen shown in FIG. 5. In response, the operation information D1 for the day is transmitted to, and saved in, the management device 7 via the public communications network 6. The management device 7 makes, based on the data thus acquired, an analysis to determine where it has taken a relatively long time for the worker to have the operation done. Thus, the operations may be performed more efficiently and improved significantly by making the management device 7 analyze the operation information D1. For example, looking over the analysis information allows the administrator who manages the operations to decide that the settings of the tool device 1 should have some problems if one worker needs a longer actual operating duration T4 than other workers. On the other hand, if the operation interval is unusually long even though there is no problem about the actual operating duration T4, then the administrator may decide that worker's skills should be improved.

### (3) Operation

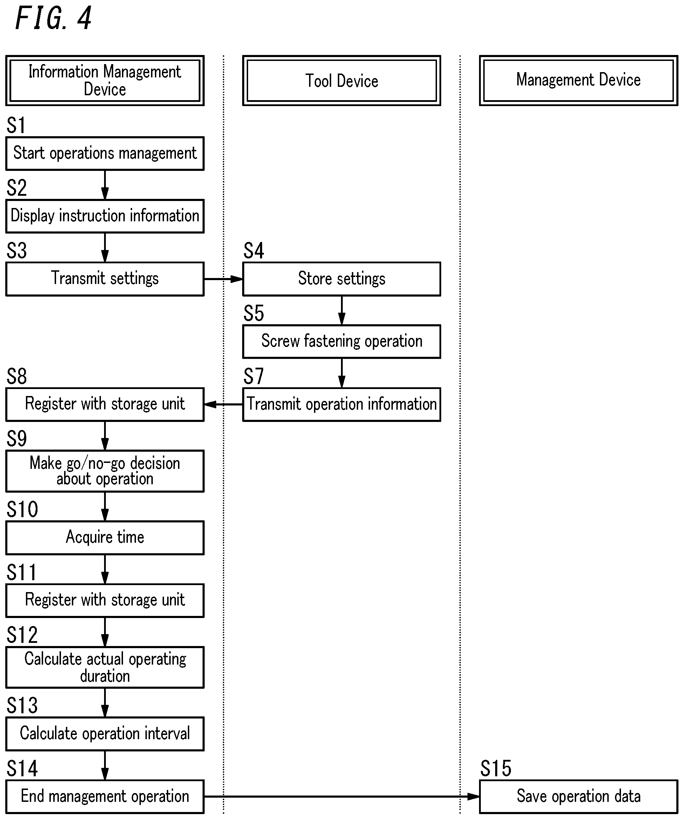

Next, it will be described with reference to FIGS. 4-6 how the tool system 3 operates. In the following description, the operation of fastening screws into a steel plate will be described as an example.

First, when the worker powers on the smartphone 4 as an exemplary information management device 2 and the tool device 1, the information management device 2 authenticates the tool device 1 and starts making operations management (in S1 shown in FIG. 4). When the information management device 2 authenticates the tool device 1 successfully, instruction information is displayed in the display area A1 shown in FIG. 5 (in Step S2 shown in FIG. 4). Next, the information management device 2 transmits settings for the tool device 1 to the tool device 1 (in Step S3 shown in FIG. 4). In response, the tool device 1 stores the settings in the storage unit 16 (in Step S4 shown in FIG. 4). Next, the worker starts performing the fastening operation using the tool device 1 (in Step S5 shown in FIG. 4). At this time, at a point in time when the fastening operation is started, the acquisition unit 19 acquires the fastening start time. Specifically, the acquisition unit 19 acquires the time when the worker pulled the trigger switch 121 (i.e., the operation start time T1) and registers the operation start time T1 with the storage unit 16.

The measuring unit 14 of the tool device 1 measures a fastening torque value (as a measured value) and stores the fastening torque value in the storage unit 16. For example, when a decision is made that the worker should have finished the fastening operation because the measuring unit 14 has recorded a maximum fastening torque value, the transmission unit 15 transmits the operation information D1, including information about the operation start time T1 and the fastening torque value (representing fastening force), to the information management device 2 (in Step S7 shown in FIG. 4). On receiving the operation information D1, including the operation start time T1 and the fastening torque value, the reception unit 22 of the information management device 2 registers the operation information D1 with the storage unit 26 (in Step S8 shown in FIG. 4). The decision unit 215 makes, based on the fastening torque value, a go/no-go decision about the fastening operation and registers the go/no-go decision with the storage unit 26 (in Step S9 shown in FIG. 4). In this case, when finding the fastening torque value falling within a predetermined range, the decision unit 215 decides that the product be a GO (i.e., fastened properly). On the other hand, when finding the fastening torque value falling outside the predetermined range, the decision unit 215 decides that the product be a NO-GO (i.e., a fastened improperly). In addition, the acquisition unit 212 also acquires a time when the go/no-go decision is output (i.e., the time T2 when the go/no-go decision is output) (in Step S10 shown in FIG. 4) and registers the time with the storage unit 26 (in Step S11 shown in FIG. 4).

Next, the calculating unit 213 of the signal processing unit 21 calculates the actual operating duration T4 by reference to the operation start time T1 acquired from the tool device 1 and the time T2 acquired in Step S10 shown in FIG. 4 (in Step S12 shown in FIG. 4). Specifically, the calculating unit 213 determines the actual operating duration T4 by calculating the difference between the time T2 when the go/no-go decision in Step S10 shown in FIG. 4 is output and the operation start time T1 in Step S6 shown in FIG. 4. Also, once the go/no-go decision about the second operation OP2, following the first operation OP1, is output after the go/no-go decision about the first operation OP1 has been output, the operation interval T5 is ready to be calculated as shown in FIG. 6. That is to say, the transmission unit 15 of the tool device 1 transmits, as the operation information D1, a first piece of information concerning the first operation OP1 and a second piece of information concerning the second operation OP2 to the information management device 2. The first piece of information is information, including the operation start time T1 and the fastening torque measured value, about the first operation OP1. The second piece of information is information, including the operation start time T1 and the fastening torque measured value, about the second operation OP2.

The calculating unit 213 determines the operation interval T5 by calculating the difference between the time T2 when the go/no-go decision saved in Step S10 shown in FIG. 4 about the second operation OP2 is output and the time T2 when the go/no-go decision saved in Step S10 shown in FIG. 4 about the first operation OP1 is output (in Step S13 shown in FIG. 4). As the worker repeats the same series of operations, the series of processing steps S5-S13 shown in FIG. 4 are performed repeatedly. When finishing the operations for the day, the worker presses down the "End of Operations" button A30 provided in the display area A3 of the image displayed on the display unit 23 of the information management device 2. In response, the information management device 2 ends the management operation (in Step S14 shown in FIG. 4). At this time, the information management device 2 transmits all the operation data stored in the storage unit 26 to the management device 7 via the public communications network 6. The management device 7 saves every operation data that the management device 7 has received from the information management device 2 (in Step S15 shown in FIG. 4).

### (4) Advantages

As can be seen from the foregoing description, a tool system 3 includes a tool device 1 and an information management device 2. The tool device 1 includes a tool unit 13, an acquisition unit 19, and a transmission unit 15. The tool unit 13 is driven by a power source (power supply unit 17) and performs a particular series of operations OP100 on a work target. The acquisition unit 19 acquires operation information D1 including information for use to determine an operation interval between a first operation OP1 included in the particular series of operations OP100 and a second operation OP2 following the first operation OP1 and also included in the particular series of operations OP100. The transmission unit 15 transmits the operation information D1. The information management device 2 includes a reception unit 22. The reception unit 22 receives the operation information D1 from the tool device 1.

This configuration allows the tool system 3 to determine the operation interval T5 and thereby contribute to improving the operation efficiency. For example, the tool system 3 may recognize which of the plurality of operations (namely, the first operation OP1 and the second operation OP2) included in the particular series of operations OP100 forces the worker to spend a relatively long time. In that case, using the operation interval T5 and the go/no-go decision in combination allows the tool system 3 to evaluate the worker's skills. For example, if the go/no-go decision is often a NO-GO (indicating that the fastening member has been fastened improperly) although the operation interval T5 is short enough, then evaluation may be made that the worker should lack skills. This contributes to having the operations done more efficiently (i.e., improving the operation efficiency).

### (5) Variations

Next, variations of the exemplary embodiment will be enumerated one after another. Note that the variations to be described below may be adopted in combination with the exemplary embodiment as appropriate.

Note that the embodiment described above is only an exemplary one of various embodiments of the present disclosure and should not be construed as limiting. Rather, the exemplary embodiment may be readily modified in various manners depending on a design choice or any other factor without departing from the scope of the present disclosure. The functions of the tool system 3 according to the exemplary embodiment may also be implemented as, for example, a processing method, a computer program, a non-transitory storage medium that stores a computer program thereon.

Specifically, a processing method according to an embodiment includes an acquisition step and a transmission step. The acquisition step includes acquiring operation information D1 including information for use to determine an operation interval T5 between a first operation OP1 and a second operation OP2. The first operation OP1 is included in a particular series of operations OP100 to be performed on a work target by a tool unit 13 to be driven by a power source. The second operation OP2 follows the first operation OP1 and is also included in the particular series of operations OP100. The transmission step includes transmitting the operation information D1 to an information management device 2.

A processing method according to another embodiment includes a reception step. The reception step includes receiving, from a tool device 1, operation information D1 including information for use to determine an operation interval T5 between a first operation OP1 and a second operation OP2. The first operation OP1 is included in a particular series of operations OP100 to be performed on a work target by a tool unit (13) to be driven by a power source. The second operation OP2 follows the first operation OP1 and is also included in the particular series of operations OP100.

A program according to an embodiment is designed to cause one or more processors to perform one of these two processing methods.

Next, variations of the exemplary embodiment will be enumerated one after another. Note that the variations to be described below may be adopted in combination as appropriate. In the following description, the exemplary embodiment described above will be hereinafter sometimes referred to as a "basic example."

The tool system 3 according to the present disclosure includes a computer system. The computer system may include a processor and a memory as principal hardware components thereof. The functions of the tool system 3 according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very-large-scale integrated circuit (VLSI), and an ultra-large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

### (5-1) First variation

In the basic example described above, the information management device 2 is configured to display the operation interval T5 in accordance with the operation information D1. However, this configuration is only an example and should not be construed as limiting. Alternatively, the display unit 23 may display worker's attribute information. The worker may be classified as one of multiple levels according to the operation interval T5 as an exemplary piece of the worker's attribute information. For example, if one worker needs a short operation interval T5, then the worker may be classified as "Level 1" indicating that his or her learning level is relatively high. On the other hand, if another worker needs a long operation interval T5, then the worker may be classified as "Level 2" indicating that his or her learning level is relatively low. That is to say, displaying the worker's attribute information means displaying information concerning the operation interval T5 by a display method different from the time indication. Optionally, both the operation interval T5 and the worker's attribute information may be displayed on the display unit 23.

### (5-2) Second variation

In the basic example described above, the information management device 2 includes the decision unit 215, the acquisition unit 212, and the calculating unit 213. However, this configuration is only an example and should not be construed as limiting. Alternatively, a tool device 1A according to a second variation may include a decision unit 5 and the acquisition unit 19. In that case, the decision unit 5 starts making a decision when a predetermined condition is satisfied. The acquisition unit 19 may measure the operation interval T5 as a time interval between a time when a go/no-go decision made by the decision unit 5 about the first operation OP1 is output and a time when a go/no-go decision about the second operation OP2, next to the first operation OP1, is output. In that case, the control unit 11 stores the operation interval T5 in the storage unit 16 and makes the transmission unit 15 transmit the operation information D1, including the operation interval T5, to the information management device 2. In response, the display unit 23 of the information management device 2 displays the operation interval T5 included in the operation information D1 thus received. In this case, a predetermined condition for starting to make a decision may be, for example, that the measuring unit 14 measures a maximum fastening torque value.

### (5-3) Third variation

In the basic example described above, the operation interval T5 is the interval between a time when one go/no-go decision made by the decision unit 215 is output and a time when the next go/no-go decision is output. However, this configuration is only an example and should not be construed as limiting. Alternatively, the operation interval T5 may also be a time interval between a first point in time when the tool unit 13 starts operating to perform the first operation OP1 and a second point in time when the tool unit 13 starts operating to perform the second operation OP2. Even in that case, the operation interval T5 may be measured by the acquisition unit 19 of the tool device 1 or calculated by the calculating unit 213 of the information management device 2, whichever is appropriate.

In that case, if a predetermined amount of time T3 passes since the acquisition unit 19 of the tool device 1 has acquired information about the first operation OP1 and before the acquisition unit 19 acquires information about the second operation OP2, the acquisition unit 19 stops acquiring the operation information D1 including information for use to determine the operation interval T5. For example, information about the first operation OP1 may be a point in time (first point in time) when the tool unit 13 has started operating to perform the first operation OP1 and information about the second operation OP2 may be a point in time (second point in time) when the tool unit 13 has started operating to perform the second operation OP2. Alternatively, information about the first operation OP1 may be a point in time when a go/no-go decision about the first operation OP1 has been output and information about the second operation OP2 may be a point in time when a go/no-go decision about the second operation OP2 has been output.

### (5-4) Fourth variation

In the basic example described above, the actual operating duration T4 is calculated by the calculating unit 213 of the information management device 2. However, this configuration is only an example and should not be construed as limiting. Alternatively, the acquisition unit 19 of the tool device 1 may acquire the operation information D1 including the actual operating duration T4. In that case, the tool device 1 may include a decision unit and the acquisition unit 19 may acquire information about the interval between a point in time when the worker has pulled the trigger switch 121 of the tool unit 13 and a point in time when the decision unit 5 outputs a go/no-go decision based on the torque measured value.

### (5-5) Fifth variation

In the basic example described above, the transmission unit 15 transmits the first piece of information concerning the first operation OP1 and the second piece of information concerning the second operation OP2, as respective pieces of operation information D1, to the information management device 2 at mutually different timings. Alternatively, the transmission unit 15 may also be configured to combine the first and second pieces of information into a single set of operation information D1 and transmit the single set of operation information D1 to the information management device 2.

### (Recapitulation)

As can be seen from the foregoing description, a tool system (3) according to a first aspect includes a tool device (1) and an information management device (2). The tool device (1) includes a tool unit (13), an acquisition unit (19), and a transmission unit (15). The tool unit (13) is driven by a power source and performs a particular series of operations (OP100) on a work target. The acquisition unit (19) acquires operation information (D1) including information for use to determine an operation interval (T5) between a first operation (OP1) and a second operation (OP2). The first operation (OP1) is included in the particular series of operations (OP100). The second operation (OP2) follows the first operation (OP1) and is also included in the particular series of operations (OP100). The transmission unit (15) transmits the operation information (D1). The information management device (2) includes a reception unit (22). The reception unit (22) receives the operation information (D1) from the tool device (1).

This aspect contributes to improving the operation efficiency.

In a tool system (3) according to a second aspect, which may be implemented in conjunction with the first aspect, the information management device (2) further includes a display unit (23) that displays at least one of the operation interval (T5) based on the operation information (D1) or worker's attribute information based on the operation information (D1).

This aspect allows either the operation interval (T5) or worker's attribute information to be displayed, thus making it easier to improve the operation efficiency.

In a tool system (3) according to a third aspect, which may be implemented in conjunction with the second aspect, the information management device (2) is a mobile device including the display unit (23).

According to this aspect, the information management device (2) is a mobile device including the display unit (23), thus increasing the degree of handiness while improving the operation efficiency.

In a tool system (3) according to a fourth aspect, which may be implemented in conjunction with any one of the first to third aspects, the particular series of operations (OP100) are operations including fastening a screw. The tool device (1) includes a measuring unit (14) that measures a fastening torque value. Either the tool device (1) or the information management device (2) includes a decision unit that makes, based on the fastening torque value, a go/no-go decision about fastening.

According to this aspect, either the tool device (1) or the information management device (2) makes, based on the fastening torque value, a go/no-go decision about fastening, thus enabling managing the operations being performed by the worker.

In a tool system (3) according to a fifth aspect, which may be implemented in conjunction with the fourth aspect, the tool device (1) includes the decision unit. The decision unit starts making the decision when a predetermined condition is satisfied. The acquisition unit (19) acquires, as the operation interval (T5), a time interval between a point in time when the go/no-go decision made by the decision unit about the first operation (OP1) is output and a point in time when the go/no-go decision made about the second operation (OP2), next to the first operation (OP1), is output.

According to this aspect, the tool device (1) includes the decision unit, thus achieving the advantage of making it easier to measure the operation interval (T5).

In a tool system (3) according to a sixth aspect, which may be implemented in conjunction with any one of the first to fourth aspects, the operation interval (T5) is a time interval between a first point in time when the tool unit (13) has started operating to perform the first operation (OP1) and a second point in time when the tool unit (13) has started operating to perform the second operation (OP2).

According to this aspect, setting the operation interval (T5) to be a time interval between a first point in time when the tool unit (13) has started operating to perform the first operation (OP1) and a second point in time when the tool unit (13) has started operating to perform the second operation (OP2) allows the tool device (1) to acquire information about the operation interval (T5), thus providing an even handier tool device (1).

In a tool system (3) according to a seventh aspect, which may be implemented in conjunction with any one of the first to sixth aspects, when a predetermined amount of time (T3) passes since the acquisition unit (19) has acquired information about the first operation (OP1) and before the acquisition unit (19) acquires information about the second operation (OP2), the acquisition unit (19) stops acquiring the operation information (D1) including the information for use to determine the operation interval (T5).

According to this aspect, when a predetermined amount of time (T3) passes, the acquisition unit (19) stops acquiring the operation information (D1), thereby acquiring operation information (D1) that reflects the actual operation interval (T5). This increases the degree of accuracy of the operation information (D1) and thereby contributes to improving the operation efficiency.

In a tool system (3) according to an eighth aspect, which may be implemented in conjunction with any one of the first to seventh aspects, the operation information (D1) includes information for use to determine an actual operating duration (T4) that it has taken for a worker to have an individual operation (the first operation OP1 or the second operation OP2), included in the particular series of operations (OP100), done using the tool unit (13).

According to this aspect, the operation information (D1) includes information for use to determine an actual operating duration (T4), thus achieving the advantage of broadening the breadth of information for use to manage the worker.

A processing method according to a ninth aspect includes an acquisition step and a transmission step. The acquisition step includes acquiring operation information (D1) including information for use to determine an operation interval (T5) between a first operation (OP1) and a second operation (OP2). The first operation (OP1) is included in a particular series of operations (OP100) to be performed on a work target by a tool unit (13) to be driven by a power source. The second operation (OP2) follows the first operation (OP1) and is also included in the particular series of operations (OP100). The transmission step includes transmitting the operation information (D1) to an information management device (2).

This aspect allows a tool device (1) of the tool system (3) to acquire operation information (D1) for use to manage the operations being performed by the worker.

A processing method according to a tenth aspect includes a reception step. The reception step includes receiving, from a tool device (1) including a tool unit (13), operation information (D1) including information for use to determine an operation interval (T5) between a first operation (OP1) and a second operation (OP2). The first operation (OP1) is included in a particular series of operations (OP100) to be performed on a work target by a tool unit (13) to be driven by a power source. The second operation (OP2) follows the first operation (OP1) and is also included in the particular series of operations (OP100).

This aspect allows an information management device (2) of the tool system (3) to acquire operation information (D1) from the tool device (1), thus achieving the advantage of allowing the tool device (1) to further improve the operation efficiency.

A program according to an eleventh aspect is designed to cause one or more processors to perform one of the two processing methods according to the ninth and tenth aspects.

This aspect enables implementing the tool system (3) using a computer.

A tool device (1) according to a twelfth aspect includes a tool unit (13), an acquisition unit (19), and a transmission unit (15). The tool unit (13) is driven by a power source and performs a particular series of operations (OP100) on a work target. The acquisition unit (19) acquires operation information (D1) including information for use to determine an operation interval (T5) between a first operation (OP1) and a second operation (OP2). The first operation (OP1) is included in the particular series of operations (OP100). The second operation (OP2) follows the first operation (OP1) and is also included in the particular series of operations (OP100). The transmission unit (15) transmits the operation information (D1). The transmission unit (15) transmits, as pieces of the operation information (D1), a first piece of information concerning the first operation (OP1) and a second piece of information concerning the second operation (OP2) to an information management device (2).

This aspect achieves the advantage of forming a tool system (3) as a minimum required configuration including a tool device (1) by making a transmission unit (15) of the tool device (1) transmit first and second pieces of information.

### Reference Signs List

- 1: Tool Device
- 2: Information Management Device
- 3: Tool System
- 13: Tool Unit
- 15: Transmission Unit
- 19: Acquisition Unit
- 22: Reception Unit
- 23: Display Unit
- D1: Operation Information
- OP1: First Operation
- OP2: Second Operation
- OP100: Particular Series of Operations
- T4: Actual Operating Duration
- T5: Operation Interval

## Claims

1. A tool system comprising:
a tool device including: a tool unit driven by a power source and configured to perform a particular series of operations on a work target; an acquisition unit configured to acquire operation information including information for use to determine an operation interval between a first operation and a second operation, the first operation being included in the particular series of operations, the second operation following the first operation and also included in the particular series of operations; and a transmission unit configured to transmit the operation information; and
an information management device including a reception unit configured to receive the operation information from the tool device.

2. The tool system of claim 1, wherein
the information management device further includes a display unit configured to display at least one of the operation interval based on the operation information or worker's attribute information based on the operation information.

3. The tool system of claim 2, wherein
the information management device is a mobile device including the display unit.

4. The tool system of any one of claims 1 to 3, wherein
the particular series of operations are operations including fastening a screw,
the tool device includes a measuring unit configured to measure a fastening torque value, and
either the tool device or the information management device includes a decision unit configured to make, based on the fastening torque value, a go/no-go decision about fastening.

5. The tool system of claim 4, wherein
the tool device includes the decision unit,
the decision unit is configured to start making the decision when a predetermined condition is satisfied, and
the acquisition unit is configured to acquire, as the operation interval, a time interval between a point in time when the go/no-go decision made by the decision unit about the first operation is output and a point in time when the go/no-go decision made about the second operation, next to the first operation, is output.

6. The tool system of any one of claims 1 to 4, wherein
the operation interval is a time interval between a first point in time when the tool unit has started operating to perform the first operation and a second point in time when the tool unit has started operating to perform the second operation.

7. The tool system of any one of claims 1 to 6, wherein
the acquisition unit is configured to, when a predetermined amount of time passes since the acquisition unit has acquired information about the first operation and before the acquisition unit acquires information about the second operation, stop acquiring the operation information including the information for use to determine the operation interval.

8. The tool system of any one of claims 1 to 7, wherein
the operation information includes information for use to determine an actual operating duration that it has taken for a worker to have an individual operation, included in the particular series of operations, done using the tool unit.

9. A processing method comprising:
an acquisition step including acquiring operation information including information for use to determine an operation interval between a first operation and a second operation, the first operation being included in a particular series of operations to be performed on a work target by a tool unit to be driven by a power source, the second operation following the first operation and also included in the particular series of operations; and
a transmission step including transmitting the operation information to an information management device.

10. A processing method comprising a reception step including receiving, from a tool device including a tool unit, operation information including information for use to determine an operation interval between a first operation and a second operation, the first operation being included in a particular series of operations to be performed on a work target by a tool unit to be driven by a power source, the second operation following the first operation and also included in the particular series of operations.

11. A program designed to cause one or more processors to perform the processing method of claim 9 or 10.

12. A tool device comprising:
a tool unit driven by a power source and configured to perform a particular series of operations on a work target;
an acquisition unit configured to acquire operation information including information for use to determine an operation interval between a first operation and a second operation, the first operation being included in the particular series of operations, the second operation following the first operation and also included in the particular series of operations; and
a transmission unit configured to transmit the operation information,
the transmission unit being configured to transmit, as pieces of the operation information, a first piece of information concerning the first operation and a second piece of information concerning the second operation to an information management device.
